Europäisches Patentamt

European Patent Office

Office européen des brevets

(11) Numéro de publication: **0 349 064 B1**

# FASCICULE DE BREVET EUROPEEN

(45) Date de publication de fascicule du brevet: **15.06.94** (51) Int. Cl.5: **H04L 27/14**

(21) Numéro de dépôt: **89201643.7**

(22) Date de dépôt: **22.06.89**

(54) **Procédé de démodulation cohérente d'un signal modulé numériquement en phase continue et à enveloppe constante.**

(30) Priorité: **28.06.88 FR 8808651**

(43) Date de publication de la demande:
**03.01.90 Bulletin 90/01**

(45) Mention de la délivrance du brevet:
**15.06.94 Bulletin 94/24**

(84) Etats contractants désignés:
**DE FR GB IT SE**

(56) Documents cités:
**EP-A- 0 091 167**
**US-A- 3 983 501**
**US-A- 4 215 239**
**US-A- 4 583 048**

(73) Titulaire: **TELECOMMUNICATIONS RADIOE-LECTRIOUES ET TELEPHONIOUES T.R.T.**
**88, rue Brillat Savarin**
**F-75013 Paris(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:

DE GB IT SE

(72) Inventeur: **Gelin, Benoît**
**SOCIETE CIVILE S.P.I.D.**
**156, Boulevard Haussmann**
**F-75008 Paris(FR)**
Inventeur: **Lebourg, Michel**
**SOCIETE CIVILE S.P.I.D.**
**156, Boulevard Haussmann**
**F-75008 Paris(FR)**

(74) Mandataire: **Pyronnet, Jacques et al**
**Société Civile S.P.I.D.**
**156, Boulevard Haussmann**
**F-75008 Paris (FR)**

## Description

L'invention concerne un procédé de démodulation cohérente par traitement numérique d'un signal modulé numériquement en phase continue et à enveloppe constante, le terme modulé de ladite phase étant égal au produit de convolution de l'impulsion de phase étalée sur plusieurs temps bits par l'information binaire transmise par paquets, le signal reçu transposé en bande de base sur deux voies en quadrature étant converti en numérique et transmis à un processeur de signal qui effectue le traitement du processus de démodulation, chacun desdits paquets comportant une séquence préliminaire par laquelle on dispose d'un signal de référence connu sur N bits qui permet de détecter la synchro-trame et la synchro-bit par corrélation avec la phase différentielle et d'amorcer l'estimation des paramètres de phase initiale $\theta_O$ et d'écart résiduel en fréquence $\Delta f_O$.

Ce procédé peut s'appliquer à n'importe quelle modulation de phase du genre précité : (GMSK, MSK, 2SRC, TFM, GTFM...) dont la loi d'évolution suivant une variation progressive de la phase a pour avantage de réduire le spectre. Un autre avantage résulte du fait que l'énergie transmise est constante.

En particulier la modulation de type GMSK dont la variation de phase est étalée sur le plus grand intervalle de temps (5 temps bit), présente la meilleure efficacité spectrale. Malheureusement, ceci a pour effet d'augmenter d'une façon importante l'interférence inter-symbole.

L'utilisation de cette modulation à bande étroite peut s'envisager dans de nombreux domaines tels que les systèmes de communications protégées en VHF et UHF, les transmissions par satellites ou les réseaux radiomobiles. Les avantages précités l'ont fait retenir par le Groupe Spécial Mobile (GSM) du CEPT pour être utilisée dans le futur réseau mobile numérique Pan-Européen à partir de 1992.

Les divers procédés de démodulation connus mettent en oeuvre des méthodes différentielle ou cohérente. On connait notamment, de la demande de brevet européen EP-A 0 091 167 un procédé de correction de fréquence de la porteuse locale dans le récepteur d'un système de transmission de données, dans lequel un mot de synchronisation est transmis avant les données. Ce mot de synchronisation permet, par corrélation avec la phase différentielle, de détecter la synchro-trame et la synchro-bit.

La première méthode a l'avantage d'être relativement simple mais les performances en terme de taux d'erreur sont très dégradées.

La démodulation cohérente présente de meilleures performances mais elle nécessite un dispositif supplémentaire de récupération de la phase de la porteuse.

Une des faiblesses rencontrées avec ce type de démodulation réside dans l'emploi de méthodes classiques de synchronisation qui utilisent des boucles à verrouillage de phase pour récupérer la porteuse et l'horloge.

En effet dans le cas d'un système fonctionnant en Accès Multiples à Répartition dans le Temps (AMRT) ou en évasion de fréquence (EVF) et lorsque le signal subit des évanouissements dus au canal, les temps de resynchronisation des boucles analogiques deviennent trop longs et réduisent la durée utile du signal (cf. brevet américain N° 4 570 125 de R.B.Gibson et B.Hill).

La mise en oeuvre d'une méthode de démodulation cohérente par traitement numérique du signal offre comme principal avantage la possibilité de mémoriser et de traiter le signal par paquets pour chacun desquels on doit effectuer un traitement séquentiel se terminant par une décision sur les informations binaires transmises.

La première opération de la séquence consiste à rechercher le début du paquet ; c'est la synchro-trame. Puis la synchro-bit permet de déterminer les instants de décision et d'assurer le bon calage temporel du filtre adapté. Le rôle de ce filtre est de réduire le bruit sans dégrader l'information utile.

Le dernier traitement est extrêmement important : il s'agit de l'estimation de la phase initiale et de l'écart résiduel de fréquence.

La phase initiale est un paramètre qui n'est pas maîtrisé dans un système de transmission. Une mauvaise estimation de ce paramètre est désastreuse sur le taux d'erreurs.

L'écart de fréquence résiduel est la résultante de l'écart de fréquence entre l'émetteur et le récepteur et de l'écart en fréquence dû à l'effet Doppler. Une évaluation défectueuse de cet écart de fréquence se traduit par des erreurs de décision sur les derniers bits du paquet, lorsque la phase a suffisamment tourné pour provoquer de telles erreurs.

Après avoir estimé la phase initiale et l'écart de fréquence résiduel on effectue une compensation et finalement on décide les bits transmis.

Une méthode numérique de démodulation utilisée en 2SRC a été proposée dans l'article de LOUBATON et VALLET intitulé : "Démodulation pseudo-cohérente de signaux de type MSK adaptée aux transmissions en EVF" et publié dans la Revue Technique Thomson-CSF, vol. 17, Septembre 1985, N°3, pages 521-554.

Dans cette méthode on retrouve la séquence de traitement suivante : synchro-trame par corrélation partielle ; synchro-bit par détection de passage à zéro de la phase différentielle ; filtrage adapté ; estimation de l'écart de fréquence résiduel par transformation de Fourier rapide sur les échantillons au carré ; estimation de la phase initiale par moyenne ; compensation en phase.

Après simulation, il s'avère que les algorithmes proposés s'adaptent mal à la GMSK.

En effet, à cause de l'interférence inter-symbole qui ne peut plus être négligée, la détermination de la synchro-bit est très dégradée en présence d'un écart résiduel en fréquence supérieur à 200 Hz.

De plus pour estimer cet écart de fréquence, on ne peut plus éliminer la modulation en effectuant une élévation au carré.

Une technique de démodulation pour la transmission de paquets par radio est donnée dans l'article de C.HEEGARD, J.A. HELLER et A.J. VITERBI intitulé : "A microprocessor-based PSK Modem for Packet Transmission over Satellite Channels" et paru dans IEEE, vol.COM-26, N°5, Mai 1978, pages 552 à 564.

Inspiré de cette technique, qui ne s'applique qu'aux modulations de type PSK sans interférence intersymbole, le procédé de l'invention vise à obtenir une synchronisation permettant d'effectuer la démodulation cohérente de n'importe quel type de modulation présentant de l'interférence intersymbole et ce, même avec un niveau de bruit et un écart résiduel en fréquence importants.

A cet effet ce procédé est remarquable en ce que l'affinement progressif des valeurs approchées est obtenu au moyen de deux boucles numériques imbriquées : une deuxième boucle initialisée au-delà d'une valeur de seuil pour la détection de la synchro-bit, et une première boucle plus rapide que la deuxième boucle, qui traite les bits par blocs successifs, dont chaque passe est initialisée en-deçà de ladite valeur de seuil et qui effectue une décision intermédiaire d'un bloc de bits à ajouter aux bits précédents du paquet d'informations pour l'estimation de $\theta_O$ et $\Delta f_O$, jusqu'à épuisement des bits du paquet.

Lesdites détections de synchro-trame et de synchro-bit sont obtenues par une première corrélation sur la phase différentielle permettant de connaître l'instant d'émission desdits paquets ± T/4, T étant la durée d'un bit, puis par une deuxième corrélation sur la phase différentielle effectuée avec un signal de référence décalé de T/4. Les fonctions de corrélation correspondantes présentent chacune un pic indépendant de la phase initiale et très peu dépendant de l'écart résiduel en fréquence, le pic de niveau supérieur et le pic de niveau inférieur définissant respectivement une synchro-bit principale SYNP et une synchro-bit secondaire SYNS. La précision de ± T/8 ainsi obtenue sur la synchro-bit est suffisante pour connaître l'instant d'échantillonnage.

Ladite détection de synchro-bit est suivie d'un filtrage adapté effectué avec la valeur SYNP par un filtre à réponse impulsionnelle finie de type Gaussien afin de limiter la bande de bruit.

Lesdites estimations de la phase initiale $\theta_0$ et de l'écart résiduel en fréquence $\Delta f_0$ à la suite dudit filtrage comportent les étapes suivantes :

- Elimination du terme de modulation en effectuant le produit du signal reçu par le conjugué du signal de référence.
- Déroulement de la phase en éliminant les sauts de phase de $2\pi$ pour obtenir une variation linéaire ayant pour équation

$$y = \Delta\omega_0 x + \theta_0 \text{ avec } \Delta\omega_0 = 2\pi\Delta f_0.$$

- Calcul des paramètres estimés $\Delta\hat{\omega}_0$ et $\hat{\theta}_0$ par une méthode de régression linéaire et de l'écart

$$\varepsilon = \sum_{i=0}^{N} \left| y_i - (\Delta\hat{\omega}_0 . x_i + \hat{\theta}_0) \right|^2$$

entre les points correspondant à ladite phase déroulée et ladite droite de régression.

Si ledit écart $\epsilon$ est inférieur à ladite valeur de seuil, ladite estimation de $\Delta f_0$ et $\theta_0$ est affinée suivant une boucle rapide en plusieurs passes exploitant les décisions intermédiaires sur les N bits de la séquence préliminaire auxquels on ajoute à chaque passe un certain nombre de bits décidès.

Si ledit écart $\epsilon$ dépasse ladite valeur de seuil du fait d'une évaluation défectueuse de synchro-bit, ledit processus de calcul est réinitialisé suivant une boucle lente pour refaire le filtrage adapté et l'estimation de $\Delta f_0$ et $\theta_0$ à partir de l'autre valeur de synchro-bit égale à ladite valeur secondaire SYNS.

Après la dernière passe, une compensation ne laisse subsister que la composante de phase du signal qui n'est plus affectée par l'écart résiduel en fréquence ni par la phase à l'origine.

La décision finale est ensuite effectuée puis un décodage différentiel fournit enfin la suite d'informations binaires transmises.

L'invention sera mieux comprise à l'aide de la description suivante donnée à titre d'exemple non limitatif, ladite description étant accompagnée de dessins qui représentent :

Figure 1 :    le schéma bloc d'un dispositif modulateur-démodulateur.

Figure 2 :    les variations d'impulsion de phase pour les modulations de types GMSK, MSK et 2SRC.

Figure 3 :    les diagrammes d'occupation spectrale pour les modulations de types GMSK, MSK et 2SRC.

Figure 4 :    le diagramme de l'oeil pour la modulation GMSK.

Figure 5 :    les variations temporelles de la phase du signal reçu après filtrage lors de la séquence d'évaluation de $\theta_0$ et $\Delta f_0$.

Figure 6 :    l'organigramme de l'ensemble du traitement de démodulation selon le procédé de l'invention.

Figure 7 :    les courbes de taux d'erreur relevées dans la littérature pour la modulation GMSK.

Figures 8 et 9 :    les courbes de taux d'erreur selon le procédé de démodulation de l'invention appliqué à un signal modulé en GMSK.

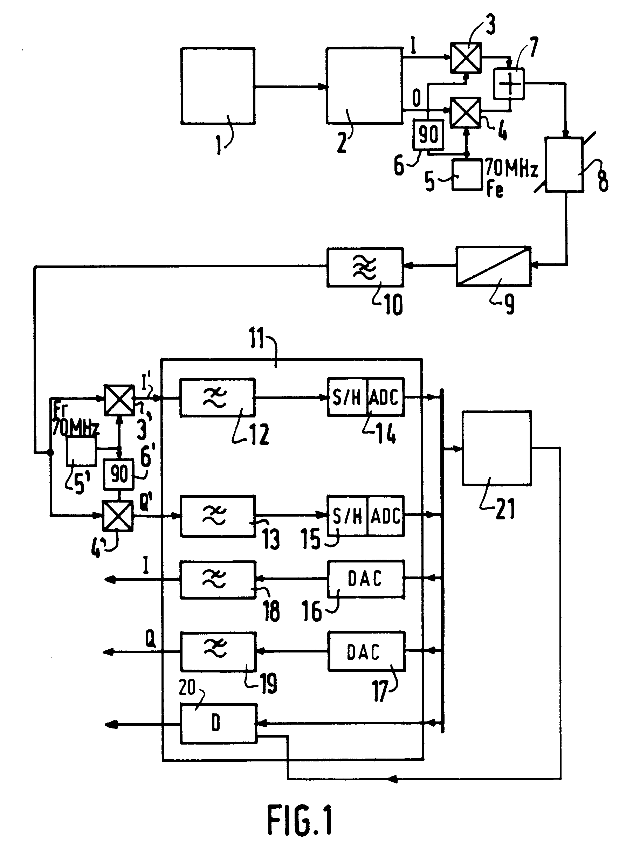

La démodulation d'un signal GMSK selon le procédé de l'invention a été simulée sur un dispositif modulateur-démodulateur dont la figure 1 donne le schéma sous la forme de blocs fonctionnels comportant successivement :

- Un ensemble de génération de trame 1 contenant un polynôme générateur d'un train binaire pseudo-aléatoire au débit de 16 kbits/s. Le format de chaque trame transmise est de 128 bits avec une séquence préliminaire connue de N = 16 ou 32 bits que l'on vient placer en début de trame au moyen d'un système de registres et de bascules. Il reste donc 128-N bits disponibles pour l'information à transmettre.

- Un modulateur 2 qui génère une impulsion de phase à variation progressive de type GMSK. Le signal modulé est disponible en bande de base à partir de deux voies I et Q en quadrature.

- Les éléments de transposition à la fréquence intermédiaire de 70 MHz. Cette transposition est opérée à l'émission au moyen des mélangeurs 3 et 4 effectuant respectivement le mélange des signaux provenant des voies I et Q avec le signal d'un oscillateur local 5 à la fréquence $F_e$ et le même si gnal déphasé de 90° dans le déphaseur 6. Après sommation des signaux en provenance des deux voies dans l'additionneur 7, le signal résultant issu de cet additionneur traverse successivement un atténuateur 8, un générateur de bruit blanc gaussien 9 de densité spectrale $N_0$ permettant de simuler les conditions réelles de fonctionnement et un filtre à large bande 10 centré sur 70 MHz.

A la réception, le signal transmis est retransposé en bande de base (parties réelle et imaginaire sur les voies I′ et Q′ respectivement) au moyen des mélangeurs 3′ et 4′, de l'oscillateur local 5′ à la fréquence $F_r$ et du déphaseur 6′.

- Un ensemble de conversion numérique 11 comportant respectivement pour les deux voies I′ et Q′ à traiter, les filtres passe-bas 12 et 13 qui assurent l'échantillonnage en respectant la condition de Shannon et les convertisseurs analogique-numérique 14 et 15 précédés d'échantillonneurs-bloqueurs qui maintiennent le niveau du signal pendant la durée de la conversion.

Les voies I′ et Q′ sont ressorties pour effectuer des contrôles (entre autres la visualisation des voies I et R après filtrage) après transformations inverses opérées à travers les convertisseurs numérique-analogique 16 et 17 et les filtres 18 et 19. Le train binaire est également sorti après décodage à travers la bascule 20.

- Un ensemble de traitement 21 comportant un processeur de si gnal dans lequel est effectuée la démodulation du signal GMSK selon le procédé de l'invention, ce processeur opérant en mode complexe et étant contrôlé par un microprocesseur.

Lorsque l'information numérique à transmettre est portée par la phase, le signal modulé peut se mettre sous la forme :

$$S(t,B) = \sqrt{\frac{2E}{T}} \exp\{j[2\pi f_0 t + \theta_0 + \varphi(t,B)]\}$$

t : temps

B : $(B_i)$ suite d'informations binaires transmises.

E : énergie du signal

T : durée d'un bit

$f_0$ : fréquence de la porteuse (pulsation $\omega_0 = 2\pi f_0$)

$\theta_0$ : phase à l'origine

$\phi(t,B)$ : phase variant suivant la suite d'informations binaires :

$$\varphi(t,B) = 2\Pi \, \frac{1}{2} \, \sum_{i=-\infty}^{+\infty} B_i \cdot q(t-iT)$$

où q(t) est l'impulsion de phase de durée finie.

Le terme 1/2 dans l'expression de la phase correspond à l'indice de modulation, c'est-à-dire au rapport excursion de fréquence sur fréquence rythme.

La fonction q(t) appelée impulsion de phase traduit la façon dont la phase va varier.

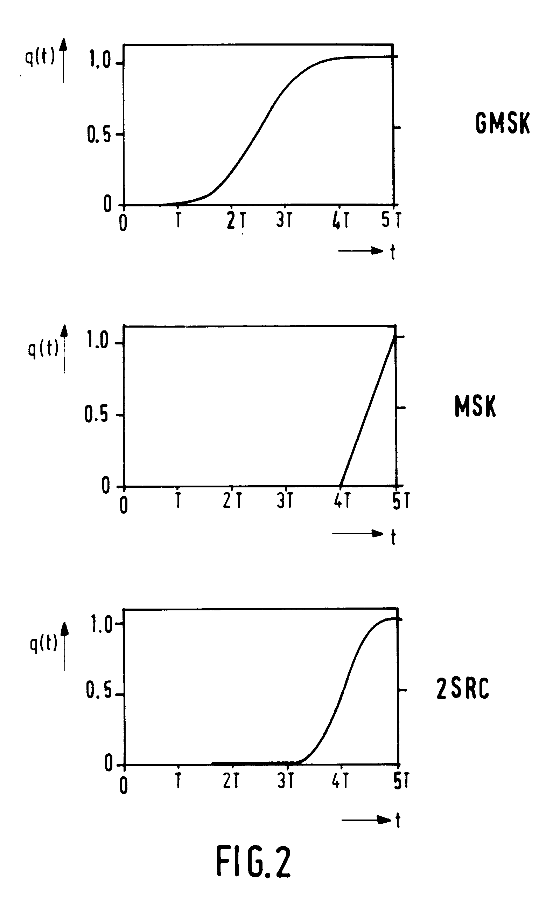

La figure 2 représente la variation de cette fonction q(t) pour les modulations de type GMSK, MSK et 2SRC.

Pour la GMSK la variation de phase est étalée sur 5 temps bit contre 2 temps bit pour la 2SRC et 1 temps bit pour la MSK.

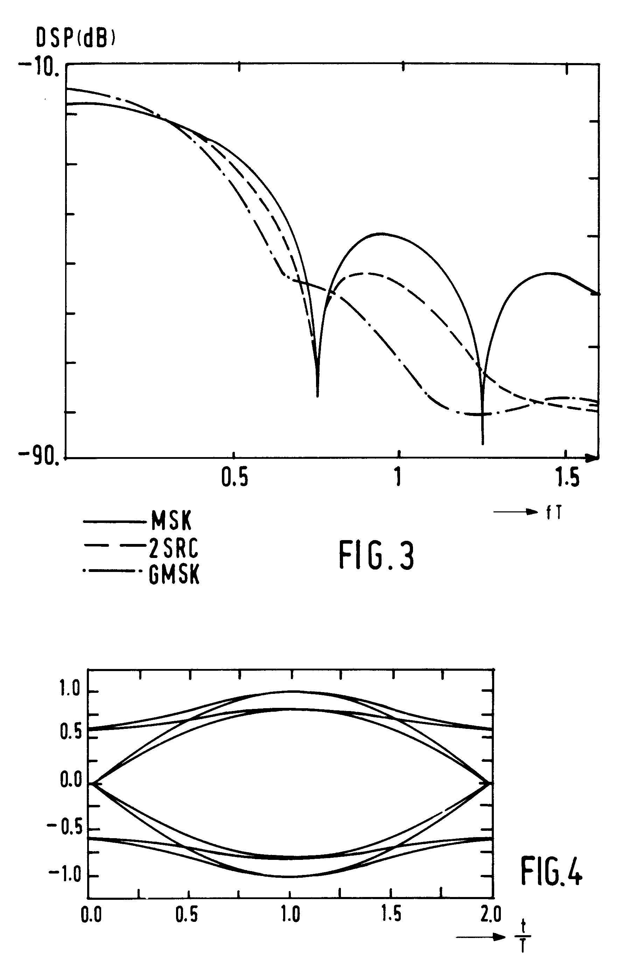

Cette variation étant plus lente pour la GMSK, le spectre occupé est moindre ainsi que le montrent les courbes de la figure 3 représentant les variations de la densité spectrale de puissance (DSP) en dB en fonction du produit (fT) de la fréquence f par la durée T d'un bit, pour les modulations MSK (en trait continu), 2SRC (en traits pointillés) et GMSK (en traits mixtes).

Mais l'étalement de l'information sur 5 temps bit pour la GMSK se traduit par la présence d'interférence inter-symbole mise en évidence par le diagramme de l'oeil de la figure 4 obtenu par l'observation du signal GMSK sur un oscilloscope synchronisé par l'horloge temps-bit.

On va maintenant expliciter les étapes successives de la démodulation cohérente d'un signal modulé numériquement en phase continue et à enveloppe constante selon le procédé de l'invention.

Afin de pouvoir utiliser une méthode qui exploite la présence d'interférence inter-symbole, il est apparu indispensable d'insérer en tête de chaque paquet une séquence préliminaire de longueur N.

Cette séquence connue va permettre de détecter le début de la trame par corrélation et ensuite d'amorcer l'estimation de $\theta_0$ et $\Delta f_0$.

Le traitement peut être décomposé en quatre parties principales : synchro-trame et synchro-bit, filtrage adapté, estimation de $\theta_0$ et $\Delta f_0$, et décision.

## Synchro-trame et synchro-bit

La détection de la synchro-trame et de la synchro-bit est effectuée par corrélation sur la phase différentielle.

Le signal complexe normalisé retransposé en bande de base à la réception a pour expression :

$$S(t) = \exp\{j[2\pi\Delta f_0 t + \theta_0 + \phi(t)\}$$

dans laquelle $\Delta f_0$ représente l'écart entre la fréquence d'émission $f_e$ et la fréquence de réception $f_r$ auquel s'ajoute la fréquence d'effet Doppler $f_d$ lorsque le récepteur se trouve en mouvement par rapport à l'émetteur :

$$\Delta f_0 = f_e - f_r + f_d.$$

Grâce à la séquence préliminaire, on dispose d'un signal de référence connu sur une durée NT, soit :

$$R(t) = \exp\{j\phi(t)\} \text{ avec } t \in [O,NT]$$

On définit alors un signal S′ égal au produit du signal S par son conjugué retardé de deux temps bit :

$$S'(t) = S(t).S^*(t-2T) = \exp\{j[4\pi\Delta f_0 T + \phi(t) - \phi(t-2T)]\}$$

En posant $\Delta\phi(t) = \phi(t)-\phi(t-2T)$ on fait apparaître la phase différentielle entre deux temps bit, d'où

$$s'(t) = \exp\{j[4\pi\Delta f_0 T + \Delta\phi(t)]\}$$

Dans cette expression de S'(t), le terme de phase initiale a disparu et l'écart de fréquence se traduit par un déphasage constant.

On définit de même à partir du signal de référence R un autre signal R' tel que :

$$R'(t) = R(t).R^*(t-2T) = \exp\{j\Delta\phi(t)\}$$

La fonction de corrélation des deux signaux complexes S' et R' s'écrit :

$$C(\tau) = {}_T\!\int^{NT} S'(t).R'^*(t-\tau)dt =$$
$$\exp\{j4\pi\Delta f_0 T\}{}_T\!\int^{NT}\exp\{j[\Delta\phi(t)-\Delta\phi(t-\tau)]\}dt$$

En prenant le module au carré de $C(\tau)$, le terme $\exp\{j4\pi\Delta f_0 T\}$ disparaît :

$$|C(\tau)|^2 = |{}_T\!\int^{NT}\exp\{j[\Delta\phi(t)-\Delta\phi(t-\tau)]\}dt|^2$$

La recherche du maximum de la fonction $|C(\tau)|^2$ permet alors de déterminer le début du paquet, parce que $|C(\tau)|^2$ est maximum pour $\tau = 0$.

L'intérêt d'effectuer la corrélation sur la phase différentielle est que le pic de corrélation est indépendant de la phase à l'origine et peu dépendant de l'écart en fréquence tant que $\Delta f_0 T \ll 1$, c'est-à-dire tant qu'on se situe dans la bande de transmission du filtre placé en sortie de l'émetteur.

Cependant le niveau du maximum du pic de corrélation est plus sensible au bruit (ce qui revient à avoir une dégradation de 3 dB du rapport signal à bruit).

Deux aspects interviennent dans le choix de la séquence préliminaire : sa longueur (N = nombre de bits) et la configuration des bits.

Plus la séquence sera longue, meilleures seront les Probabilités de Fausse Alarme (PFA) et de Non-Détection (PND).

La configuration binaire de la séquence a une influence sur la précision du calage temporel. Le choix n'est pas très facile, mais on peut malgré tout la choisir en respectant les contraintes suivantes :

- suite non périodique (sinon il se forme plusieurs pics de corrélation),
- suite non constante (sinon il apparaît un étalement temporel important),
- suite qui ne comporte pas trop de valeurs alternées (sinon cela entraîne des variations de phase trop faibles).

On peut appliquer la méthode de corrélation exposée ci-dessus au calcul de la synchro-trame en effectuant cette corrélation à raison de 2 échantillons par temps bit. En désignant la valeur S(i T/2) de S(t) pour t = i T/2 et i entier par S(i) on a :

$$S(i) = \exp\{j[2\pi\Delta f_0 i\tfrac{T}{2} + \theta_0 + \phi(i\tfrac{T}{2})]\}$$
$$R_1(i) = \exp\{j\phi(i\tfrac{T}{2})\}$$

On calcule :

$$S'(i) = S(i).S^*(i-4) = \exp\{j[4\pi\Delta f_0 T + \Delta\phi(i\tfrac{T}{2})]\}$$

$$R'_1(i) = R_1(i).R_1^*(i-4) = \exp\{j\Delta\phi(i\tfrac{T}{2})\}$$

En posant :

$$C_1(j) = \left|\sum_{4}^{2N-1} S'(i).R'^*_1(i-j)\right|^2$$

la recherche du maximum de $C_1(j)$ permet de détecter le début du paquet. Lorsque ce maximum est détecté, la synchro-trame est acquise et l'instant d'émission du paquet est-connu à $\pm T/4$.

Cette précision n'est pas suffisante pour déterminer la synchro-bit.

Pour affiner l'estimation, il faut effectuer une seconde corrélation avec un signal de référence décalé de T/4. On définit comme pour la première corrélation :

$R_2(i) = \exp[j\phi(i\ T/2\ +\ T/4)]$
$R'_2(i) = \exp[j\Delta\phi(i\ T/2\ +\ T/4)]$

$$C_2(j) = \left| \sum_{\substack{4}}^{2N-1} S'(i)R'^{*}_2(i-j) \right|^2$$

Les deux corrélations $C_1(j)$ et $C_2(j)$ vont présenter des pics pour les indices $J_1$ et $J_2$ respectivement.

Si $C_1(J_1) \geqq C_2(J_2)$ on prendra synchro-bit = $J_1\ T/2$
Si $C_2(J_2) > C_1(J_1)$ on prendra synchro-bit = $J_2\ T/2\ +\ T/4$

Cette double corrélation permet d'avoir une précision de $\pm\ T/8$ sur la synchro-bit.

Compte tenu de la lenteur de la variation de la phase pour la modulation GMSK, cette précision est suffisamment bonne pour connaître l'instant d'échantillonnage.

On a déjà précisé que dans certains cas où le rapport signal à bruit est faible ($Eb/N_0 < 6$ dB), le choix de la synchro-bit pouvait être erroné. Cela résulte de l'appréciation incertaine du niveau des pics de corrélation (par exemple si l'on choisit $J_2\ T/2\ +\ T/4$ au lieu de $J_1\ T/2$).

Pour faire l'ultime décision on va définir SYNP la valeur de synchro-bit dite "principale" et SYNS la valeur de synchro-bit dite "secondaire".

Si $C_1(J_1) \geqq C_2(J_2)$ alors SYNP : $\quad J_1\ T/2$
SYNS : $\quad J_2\ T/2\ +\ T/4$
Si $C_2(J_2) > C_1(J_1)$ alors SYNP : $\quad J_2\ T/2\ +\ T/4$
SYNS : $\quad J_1\ T/2$

Le filtrage adapté sera effectué avec la valeur SYNP.

La modification éventuelle sera effectuée dans l'algorithme d'estimation de l'écart de fréquence et de la phase initiale à partir d'un critère d'erreur qui sera défini ultérieurement.

L'erreur sur la synchro-bit a peu d'effet sur le filtrage adapté ; par contre cela dégrade énormément l'estimation de $\Delta f_0$ et $\theta_0$.

Cette méthode de double corrélation sur la phase différentielle est judicieuse car elle permet de déterminer le début de la trame et d'effectuer une première estimation de la synchro-bit. Ce dernier paramètre sera confirmé ou ajusté au cours de l'estimation de la phase de la porteuse.

Filtrage adapté

On peut montrer (cf. P.A.LAURENT : "Interprétation des modulations d'indice demi-entier. Extension à des indices voisins et applications", $9^{\text{ème}}$ Colloque GRETSI, Nice, Mai 1983, pages 503 à 509) que toutes les modulations numériques de la forme $S(t,B) = \exp.j.\phi(t,B)$ peuvent se représenter sous la forme d'une modulation d'amplitude selon l'expression suivante :

$$S(t,B) = \sum_{i=-\infty}^{+\infty} j^i C_i F_p(t-iT) \qquad \text{avec } C_i = \prod_{i=-\infty}^{n} B_i$$

dans laquelle $F_p(t)$ ést la fonction principale.

La décomposition de la modulation GMSK en une modulation d'amplitude est particulièrement intéressante, car elle permet de déterminer facilement le filtre adapté.

Ce dernier a une réponse impulsionnelle égale à $F_p(t$ - synchro-bit$)$.

Le terme synchro-bit tient compte de la position du signal reçu par rapport à l'horloge d'échantillonnage.

Le filtre adapté est réalisé sous la forme d'un filtre à Réponse Impulsionnelle Finie à 11 coefficients.

Estimation de la phase initiale et de l'écart de fréquence

La méthode envisagée est basée sur l'exploitation de la séquence préliminaire.

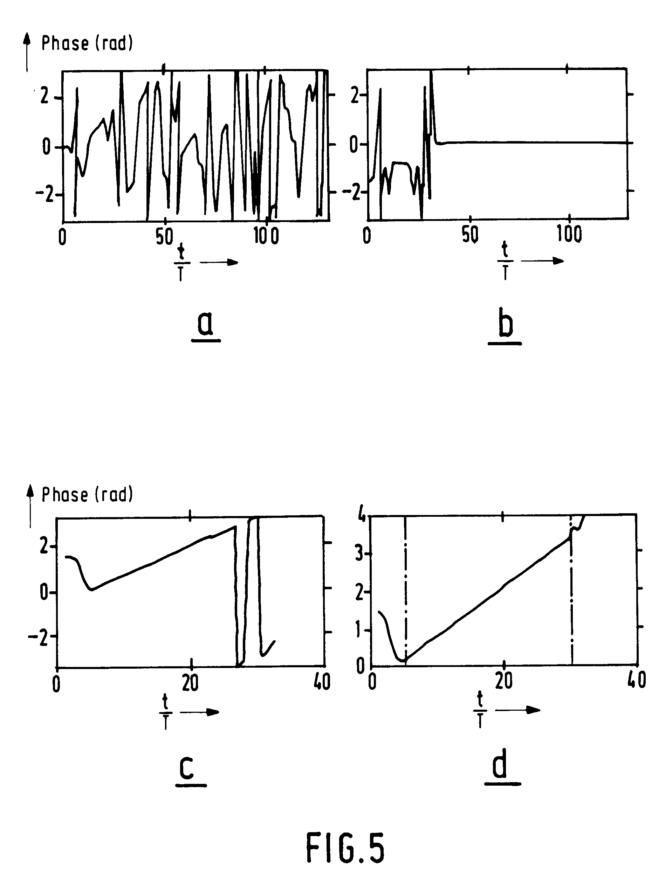

En sortie du filtre adapté on dispose d'un signal reçu dont la variation en fonction du temps est représentée sur la figure 5a. Après normalisation, ce signal a pour expression :

$Z(t) = \exp\{j[2\pi\Delta f_0 t + \theta_0 + \phi(t)\}$

La séquence préliminaire étant connue, on peut facilement calculer l'évolution du signal sur un intervalle [O,NT], N étant le nombre de bits de la séquence préliminaire.

On connaît alors le signal de référence dont la figure 5b montre la variation en fonction du temps et dont l'expression normalisée peut s'écrire :

$Z_0(t) = \exp\{j\phi(t)\}$ pour $t \in [O,NT]$

En effectuant le produit du signal reçu $Z(t)$ par le conjugué du signal de référence $Z_0(t)$ on élimine le terme $\phi(t)$ dû à la modulation (figure 5c).

$$Z(t).Z_0^{*}(t) = \exp\{j[2\pi\Delta f_0 t + \theta_0]\}.$$

L'étape suivante consiste à transformer le signal complexe obtenu en une variation linéaire traduisant l'évolution de la phase.

$$\emptyset(t) = \mathrm{Arctg}[Z(t).Z_0^{*}(t)] = [2\pi\Delta f_0 t + \theta_0]\,\mathrm{modulo}\ 2\pi$$

Pour cela, il faut dérouler la phase en éliminant les sauts de phase de $2\pi$.

La figure 5d représente cette variation dont l'équation est :

$y = \Delta\omega_0.x + \theta_0$ avec $\Delta\omega_0 = 2\pi\Delta f_0$

Par une méthode de régression linéaire, on peut calculer les paramètres estimés $\widehat{\Delta\omega_0}$ et $\widehat{\theta_0}$. Ce calcul est systématique et donc simple à mettre en oeuvre.

A partir des paramètres estimés, on peut maintenant compenser le signal en effectuant une multiplication complexe :

Signal reçu : $\quad Z(t) = \exp\{j[\Delta\omega_0 t + \theta_0 + \phi(t)]\}$
Signal compensé : $\quad S(t) = Z(t)\exp[-j(A\widehat{\omega_0} t + \widehat{\theta_0})]$
$\quad\quad\quad\quad\quad\quad\quad\quad S(t) = \exp\{j[(\Delta\omega_0 - \widehat{\Delta\omega_0})t + \theta_0 - \widehat{\theta_0} + \phi(t)]\}$

Si l'estimation est correcte,

$\widehat{\Delta\omega_0} = \Delta\omega_0$, $\widehat{\theta_0} = \theta_0$ et $S(t) = \exp\{j\phi(t)\}$

Le signal obtenu n'est plus affecté par un écart de fréquence ni par la phase à l'origine.

L'estimation de $\Delta\omega_0$ et $\theta_0$ est sensible à trois paramètres : le bruit, le calage temporel et la longueur de la séquence préliminaire.

Lorsque le bruit augmente ($E_b/N_0 < 6$ dB), cela peut entraîner des variations soudaines de phase qui se traduisent par des sauts de $2\pi$ sur la phase déroulée. Ce problème a été éliminé en utilisant une technique de détection et de correction de saut de phase de $2\pi$.

La sensibilité au calage temporel est liée à l'évaluation de la synchro-bit. Si ce paramètre est mal estimé, la modulation n'est pas parfaitement éliminée ; cela se traduit par une phase déroulée affectée d'un résidu de modulation. L'estimation de $\Delta\omega_0$ et $\theta_0$ s'en trouve dégradée.

Pour avoir une estimation de fréquence suffisamment bonne (erreur inférieure à 10 Hz) qui n'entraîne pas d'erreur de décision, il est nécessaire d'utiliser une séquence préliminaire de longueur supérieure ou égale à 64 bits.

Sur 128 bits, cela entraîne un rendement de transmission maximum de 50 %.

Un tel rendement est tout à fait incompatible avec une transmission par paquets.

EP 0 349 064 B1

Si l'on adopte au départ une séquence préliminaire de longueur plus faible N = 16 ou 32 bits, la méthode exposée ci-dessus permet d'obtenir des échantillons compensés.

Cependant, la précision de l'estimation n'est pas suffisante pour corriger parfaitement la phase lorsque le niveau de bruit est important.

Une erreur de 20 Hz entre le début du message et la fin se traduit par une rotation de phase de 58°, ce qui entraîne des erreurs de décision sur la fin du paquet.

Ce sont donc les bits proches de la fin du paquet qui sont les plus affectés.

L'idée de l'invention consiste à décider un certain nombre de bits, par exemple les 16 bits suivant la séquence préliminaire et de refaire le processus d'estimation en considérant une nouvelle séquence de référence correspondant aux N bits de séquence préliminaire plus 16 nouveaux bits décidés.

En quatre nouvelles passes, on arrive à obtenir une précision de quelques Hertz pour $E_b/N_0$ = 6 dB. Cela fait à la fin une estimation sur N + 64 bits.

La longueur de la séquence préliminaire a pu être ainsi notablement réduite par cette méthode d'estimation en plusieurs passes qui exploite les décisions intermédiaires sur des blocs de bits, qui résiste très bien au bruit et dont la convergence est rapide.

Toutefois, ainsi qu'il a déjà été évoqué, l'estimation de $\Delta\omega_0$ et $\theta_0$ est sensible à la synchro-bit.

Une mauvaise estimation de synchro-bit va se traduire par une différence importante entre les points correspondant à la phase déroulée et la droite de régression :
Soit

$$\text{Soit} \qquad \varepsilon = \sum_{i=0}^{N} \left| y_i - (\hat{\Delta\omega_0} . x_i + \hat{\theta_0}) \right|^2$$

Dans ce cas, $\epsilon$ va augmenter de plus en plus.

Très rapidement (à la première ou à la deuxième passe) $\epsilon$ va dépasser une valeur de seuil et va ordonner un changement de synchro-bit.

On prendra alors pour valeur de synchro-bit la valeur secondaire SYNS.

Tout le processus de calcul est alors réinitialisé pour refaire le filtrage adapté et l'estimation de $\Delta\omega_0$ et $\theta_0$ avec la nouvelle valeur de synchro-bit.

Décision

Après compensation, la décision est effectuée sur l'expression du signal mis sous la forme d'une modulation d'amplitude faisant intervenir la fonction principale $F_p(t)$.

Pour calculer les bits transmis il suffit de faire enfin un décodage différentiel.

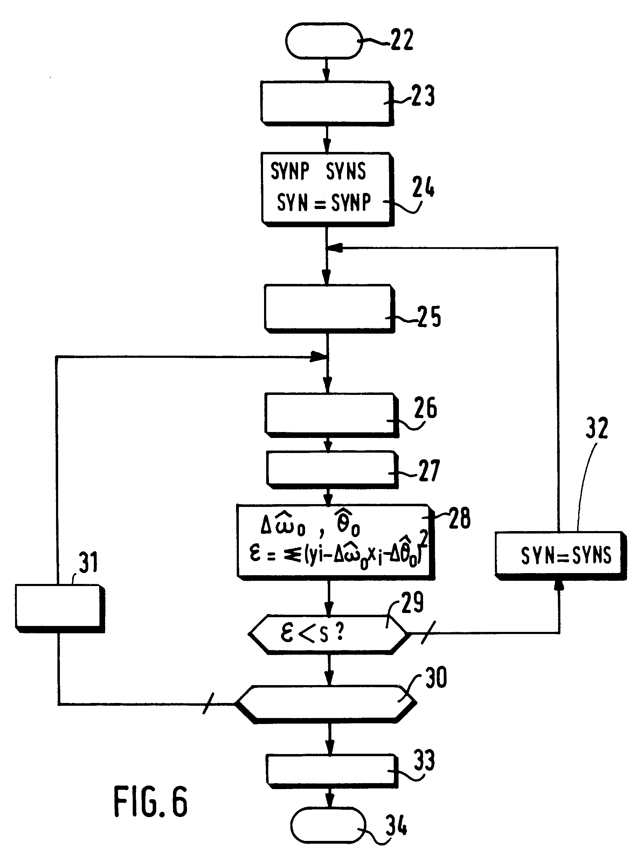

La figure 6 fournit sous forme d'organigramme tout le processus de calcul.

Le déroulement d'estimation des paramètres $\Delta\omega_0$ et $\theta_0$ à partir du DEBUT de programme (case 22) peut paraître lourd à mettre en oeuvre, mais il est systématique et relativement simple.

On effectue d'abord une estimation grossière de la synchro-trame (case 23) et de la synchro-bit (case 24) par corrélation, calcul des valeurs SYNP et SYNS pour la synchro-bit, et le choix initial SYN = SYNP pour la valeur de la synchro-bit SYN, ensuite le filtrage adapté (case 25), puis la détermination approchée de la phase de la porteuse par régression linéaire sur 16 ou 32 temps bit : suppression de la modulation (case 26), déroulement de la phase (case 27), estimation dê $\Delta\omega_0$ êt $\theta_0$ et calcul de l'écart $\epsilon$ (case 28). On compare enfin l'écart $\epsilon$ calculé à une valeur de seuil S (case 29), et on décide s'il agit de la dernière passe (case 30).

La suite du processus de démodulation peut alors être décrite comme un système de deux boucles numériques imbriquées :
- une première boucle pour l'estimation de $\Delta\omega_0$ et $\theta_0$ se refermant par la liaison 31,
- une seconde boucle pour l'estimation de synchro-bit se refermant par la liaison 32.

A chaque passage dans la première boucle numérique, on redécide dans la case 31 les N bits qui suivent la séquence préliminaire afin d'affiner au fur et à mesure l'estimation de $\Delta\omega_0$ et $\theta_0$. Ces décisions sont dites intermédiaires.

A chaque passage dans la seconde boucle numérique, on calcule dans la case 29 l'écart $\epsilon$ que l'on compare à la valeur de seuil. Ce critère va permettre de valider ou de réajuster la synchro-bit. Dans ce dernier cas, on prendra pour la valeur de la synchro-bit SYN la valeur secondaire SYNS (case 32).

On distingue deux cas possibles dans le traitement :

- pas de remise en cause de la synchro-bit. La détermination de $\Delta\omega_0$ et $\theta_0$ est alors effectuée en quelques passes par une convergence rapide de la première boucle.
- remise en cause de la synchro-bit. Dans ce cas, on recommence tout le processus de filtrage et de démodulation. Le temps de traitement par la voie de la seconde boucle devient alors plus long.

La suite de l'organigramme à partir de la dernière passe (case 30) comporte la mise en oeuvre de la décision finale (case 33) et de la FIN du programme (case 34).

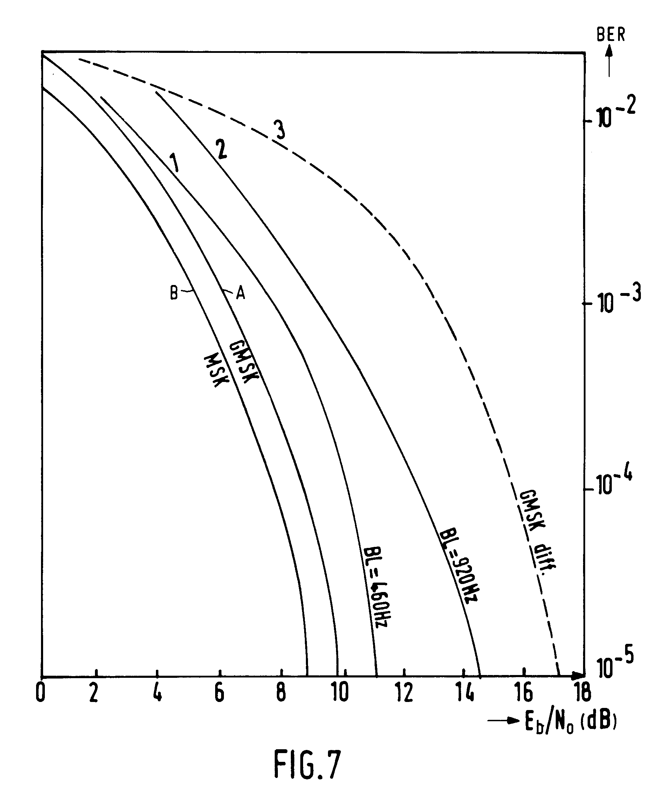

A titre indicatif, on a représenté sur la figure 7 les courbes A et B de taux d'erreurs (BER) théoriques relevées dans la littérature pour les modulations GMSK et MSK.

Pour la modulation GMSK, les courbes 1 et 2 correspondent à un démodulateur cohérent avec récupération de porteuse par une boucle d'asservissement analogique, de bandes passantes $B_L$ = 460 Hz et 920 Hz respectivement.

Ce type de démodulation ne pourraît donc pas fonctionner, ni en EVF ni en AMRT. De plus ces courbes sont obtenues sans écart de fréquence.

La courbe 3 correspond au résultat obtenu avec un démodulateur différentiel analogique.

A $10^{-2}$ de taux d'erreurs, la dégradation par rapport à la théorie est très importante (7 dB environ).

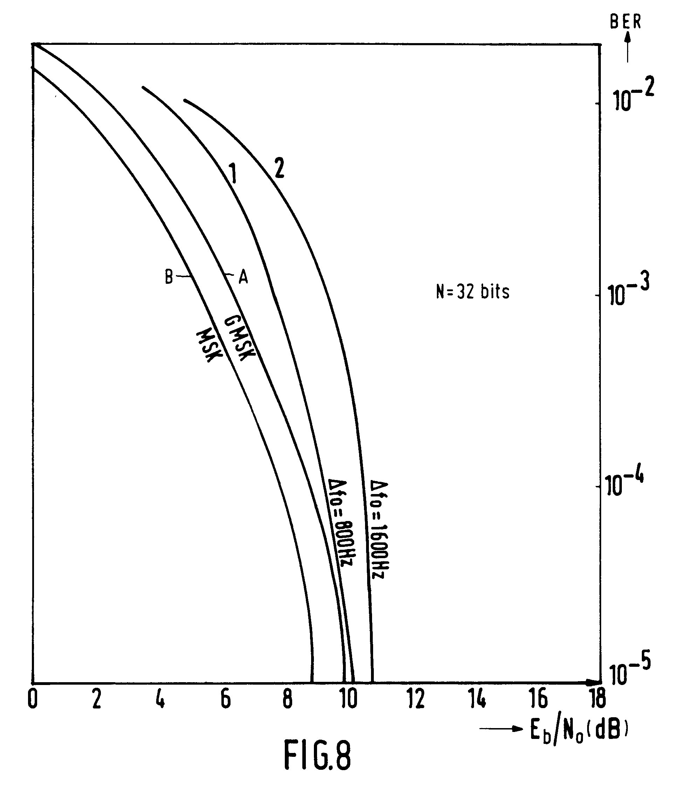

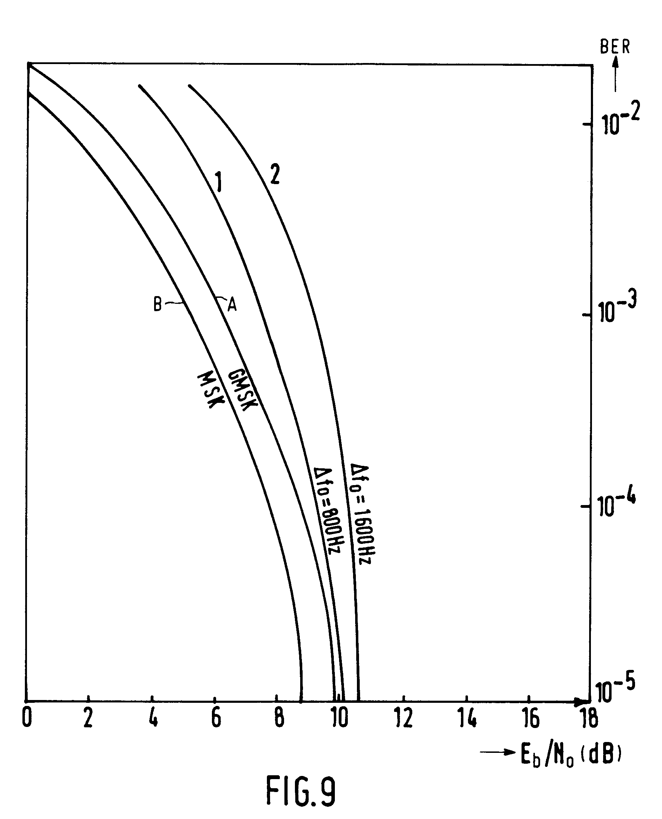

Pour la modulation GMSK, les courbes de taux d'erreurs obtenus avec le procédé de démodulation de l'invention sont portées sur les figures 8 et 9 pour des séquences préliminaires de 32 et 16 bits respectivement et avec des écarts de fréquences $\Delta f_0$ = 800 Hz (courbes 1) et $\Delta f_0$ = 1600 Hz (courbes 2).

Pour $\Delta f_0$ = 800 Hz les résultats sont assez bons.

A un taux d'erreur de $10^{-2}$, on a une dégradation de 1,2 dB pour N = 32 bits et de 1,4 dB pour N = 16 bits par rapport aux taux d'erreur théoriques dont les courbes A et B (déjà représentées sur la figure 7) sont également reportées sur lesdites figures.

Les résultats sont peu sensibles à l'écart de fréquence tant que $\Delta f_0 < 1000$ Hz. Au-delà, les résultats sont un peu dégradés.

Le procédé de l'invention a permis de mettre en oeuvre un algorithme de démodulation cohérente de la modulation numérique de type GMSK.

Les résultats de simulation montrent que cette méthode résiste bien au bruit et à un écart de fréquence même important entre l'émetteur et le récepteur.

Ce procédé est donc tout à fait compatible avec un fonctionnement en AMRT ou en EVF et il peut s'appliquer à n'importe quelle modulation présentant de l'interférence inter-symbole.

**Revendications**

1. Procédé de démodulation cohérente par traitement numérique d'un signal modulé numériquement en phase continue et à enveloppe constante, le terme modulé de ladite phase étant égal au produit de convolution de l'impulsion de phase étalée sur plusieurs temps bits par l'information binaire transmise par paquets, le signal reçu transposé en bande de base sur deux voies (I et Q) en quadrature étant converti en numérique et transmis à un processeur de signal (21) qui effectue le traitement du processus de démodulation, chacun desdits paquets comportant une séquence préliminaire par laquelle on dispose d'un signal de référence connu sur N bits qui permet de détecter la synchro-trame et la synchro-bit par corrélation avec la phase différentielle et d'amorcer l'estimation des paramètres de phase initiale $\theta_O$ et d'écart résiduel en fréquence $\Delta f_O$, caractérisé en ce que l'affinement progressif des valeurs approchées est obtenu au moyen de deux boucles numériques imbriquées : une deuxième boucle (32) initialisée au-delà d'une valeur de seuil (S) pour la détection de la synchro-bit, et une première boucle (31) plus rapide que la deuxième boucle, qui traite les bits par blocs successifs, dont chaque passe est initialisée en deçà de ladite valeur de seuil (S) et qui effectue une décision intermédiaire d'un bloc de bits à ajouter aux bits précédents du paquet d'informations pour l'estimation de $\theta_O$ et $\Delta f_O$, jusqu'à épuisement des bits du paquet.

2. Procédé selon la revendication 1, caractérisé en ce que, ledit signal de référence connu sur N bits permettant de détecter la synchro-trame à moins d'un demi temps de bit (T/2), il comporte les étapes suivantes :

   a) une estimation de la synchro-trame ((23) par une première corrélation avec la phase différentielle qui fournit aussi une première estimation de la synchro-bit (24) (SYN) à ± T/4,

   b) une deuxième estimation de la synchro-bit (24) à ± T/4 par une deuxième corrélation avec la phase différentielle sur le signal reçu en quadrature,

   c) le classement desdites estimations de la synchro-bit (24) en fonction de l'importance des pics de corrélation : principal (SYNP) pour le plus grand et secondaire (SYNS) pour l'autre,

d) un filtrage adapté (25) effectué avec la valeur retenue (SYNP) pour un nombre additionnel de bits suivant ladite séquence préliminaire,

e) l'estimation de la phase initiale $\theta_o$ et de l'écart résiduel en fréquence $\Delta f_o$ (28) à partir du signal filtré (25) et démodulé (26),

f) l'affinement progressif de $\theta_o$ et $\Delta f_o$ (31) dans une première boucle qui se referme juste en aval dudit filtrage adapté et qui, à chaque passe, prend en compte un nombre de bits additionnels par rapport à ceux de la passe précédente, tant que $\theta_o$ et $\Delta f_o$ sont compatibles avec un seuil d'erreur S,

g) le changement des pics de corrélation (SYNP et SYNS) (32) selon une deuxième boucle qui se referme juste en amont dudit filtrage adapté, si le seuil (S) est dépassé (29), et reprise à l'origine de la première boucle avec la nouvelle valeur du pic de corrélation secondaire (SYNS), ledit filtrage adapté étant effectué par un filtre à réponse impulsionnelle finie de type Gaussien afin de limiter la bande de bruit.

3. Procédé selon la revendication 2, caractérisé en ce que lesdites estimations de la phase initiale $\theta_o$ et de l'écart résiduel en fréquence $\Delta f_o$ à la suite dudit filtrage (25) comportent les étapes suivantes :
- élimination du terme de modulation (26) en effectuant le produit du signal reçu par le conjugué du signal de référence,
- déroulement de la phase (27) en éliminant les sauts de phase de $2\pi$ rd pour obtenir une variation linéaire ayant pour équation

$$y = \Delta\omega_o x + \theta_o \text{ avec } \Delta\omega_o = 2\pi\Delta f_o,$$

- calcul des paramètres estimés $\widehat{\Delta\omega}_o$ et $\hat{\theta}_o$ (28) par une méthode de régression linéaire et de l'écart

$$\epsilon = \sum_{i=0}^{N} |y_i - (\hat{\Delta\omega}_o \cdot x_i + \hat{\theta}_o)|^2$$

entre les points correspondant à ladite phase déroulée et ladite droite de régression.

4. Procédé selon la revendication 3, caractérisé en ce que ledit écart $\epsilon$ étant inférieur à ladite valeur de seuil (S), ladite estimation de $\Delta f_o$ et $\theta_o$ est affinée (31) suivant une première boucle en plusieurs passes exploitant les décisions intermédiaires sur les N bits de la séquence préliminaire auxquels on ajoute à chaque passe un certain nombre de bits décidés.

5. Procède selon la revendication 3, caractérisé en ce que ledit écart $\epsilon$ dépassant ladite valeur de seuil (29) du fait d'une évaluation défectueuse de synchro-bit, ledit processus de calcul est réinitialisé suivant une deuxième boucle (32) pour refaire le filtrage adapté et l'estimation de $\Delta f_o$ et $\theta_o$ à partir de l'autre valeur de synchro-bit égale à ladite valeur secondaire SYNS.

6. Procédé selon la revendication 4 ou 5, caractérisé en ce qu'à la suite de la dernière passe (30), une compensation ne laisse subsister que la composante de phase du signal qui n'est plus affectée par l'écart résiduel en fréquence $\Delta f_o$ ni par la phase initiale $\theta_o$, la décision finale étant ensuite effectuée (33) et un décodage différentiel fournissant enfin la suite d'informations binaires transmises.

7. Application du procédé selon l'une des revendications 1 à 6, aux démodulations cohérentes de signaux modulés selon des modulations de types GMSK, 2SRC, TFM, GTFM,... dont la loi d'évolution de la phase suit une variation progressive.

## Claims

1. Method of coherent demodulation for digitally processing a digitally modulated signal having a continuous phase and a constant envelope, the modulated term of said phase being dual to the convolution product of the phase impulse response extending over a plurality of bit periods and the binary information transmitted in packets, the received signal being transposed in the baseband over two quadrature channels, converted into a digital signal and transferred to a signal processor which carries out the demodulation method, characterized in that approximate values are progressively refined by two interleaved digital loops: - a second loop (32) initiated beyond a threshold value (S) for detecting bit synchronization, and a first loop (31), faster than the second loop, which processes the bits in successive blocks, of which each run is initiated when said threshold value (S) is exceeded and which effects an intermediate decision about a block of bits to be added to the preceding bits of the information packet for the estimation of $\Delta f_0$ and $\Theta_0$ until bits of the packet are exhausted.

2. Method as claimed in Claim 1, characterized in that it comprises the following steps, while said known reference signal of N bits makes it possible to detect frame-synchronization in less than half a bit period (T/2),

a) estimating the frame-synchronization (23) by a first correlation with the differential phase which also produces a first estimation of the bit synchronization (24)(SYN) in ± T/4

b) making a second estimation of the bit synchronization (24) in ± T/4 by a second correlation with the differential phase with the received quadrature signal,

c) classifying said estimations of the bit synchronization (24) as a function of the correlation peaks: primary (SYNP) for the largest estimation and secondary (SYNS) for the other estimation,

d) inserting a matched filter (25) effected with the retained value (SYNP) for an additional number of bits following said preliminary sequence,

e) estimating the initial phase $\theta_0$ and of the residual frequency difference $\Delta f_0$ (28) based on the filtered (25) and demodulated (26) signal,

f) progressively refining $\theta_0$ and $\Delta f_0$ (31) in a first loop which closes again just downstream of said matched filter and which, with each run, takes an additional number of bits into consideration compared with those of the preceding run, as long as $\theta_0$ and $\Delta f_0$ are compatible with an error threshold (S),

g) changing the correlation peaks (SYNP and SYNS)(32) in a second loop which closes again just upstream of said matched filter if the threshold (S) is exceeded (29), and resumes at the beginning of the first loop with the new peak value of the secondary correlation peak (SYNP), said matched filter being effected by a finite Gaussian impulse response filter to limit the noise band.

3. Method as claimed in Claim 2, characterized in that the said estimations of the initial phase $\theta_0$ and of the residual frequency offset $\Delta f_0$ following said filter (25) comprise the following steps:

- eliminating the modulation term (26) by forming the product of the received signal by the conjugate value of the reference signal,

- phase unrolling (27) by eliminating the $2\pi$ phase jumps in order to obtain a linear variation having the following equation

$$y = \Delta\omega_0 x + \theta_0 \text{ with } \Delta\omega_0 = 2\pi\Delta f_0$$

- calculating the estimated parameters $\Delta\hat{\omega}_0$ and $\hat{\theta}_0$ (28) by means of a linear regression method and the difference

$$\epsilon = \sum_{i=0}^{N} |y_1 - (\Delta\hat{\omega}_0 \cdot x_i + \hat{\theta}_0)|^2$$

between the points corresponding to said unrolled phase and said regression line.

4. Method as claimed in Claims 3, characterized in that when said difference $\epsilon$ is smaller than the said threshold value (S), said estimation of $\Delta f_0$ id $\Theta_0$ is refined (31) following a fast loop for a plurality of runs and exploiting the intermediate decisions on the N bits of the preamble sequence to which at each run a specified number of decided bits are added.

5. Method as claimed in Claims 3, characterized in that when said difference $\epsilon$ exceeds said threshold value (29) as a result of an erroneous evaluation of the bit--synchronization, said calculating step is re-initiated following a second loop (32) in order to effect again the matched filtering and the estimation of $\Delta f_0$ and $\epsilon_0$ on the basis of the other value of the bit-synchronization which is equal to the value of said secondary bit-synchronization SYNS.

6. Method as claimed in Claim 4 or 5, characterized in that at the end of the last run (30) a compensation step is performed which leaves only the phase component of the signal which is not affected any longer by the residual frequency offset $\Delta f_0$ nor by the initial phase $\Theta_0$, the final decision step then being made (33) and a differential decoding step finally providing the stream of transmitted binary information.

7. Application of the method as claimed in one of the Claims 1 to 6 to coherent demodulations of signals modulated according to the GMSK, 2SRC, TFM, GTFM, ... types of modulation, whose phase evolution law follows a progressive variation.

**Patentansprüche**

1. Verfahren zur kohärenten Demodulation eines digital modulierten Signals mit kontinuierlicher Phase und mit einer konstanten Umhüllenden durch digitale Verarbeitung wobei der modulierte Term der genannten Phase dem Produkt aus der Faltung des Phasenimpulses ausgebreitet über mehrere Bitperioden durch die paketweise übertragene binäre Information, wobei das in dem Basisband transponierte über zwei Quadratur-Kanäle (I und Q) empfangene Signal in ein digitales Signal umgewandelt und einem Signalprozessor (21) zugeführt wird, der die Demodulation herbeiführt, wobei jedes dieser Pakete eine einleitende Folge aufweist, wodurch ein bekanntes Bezugssignal von N Bits erhalten wird, wodurch der Synchronrahmen und das Synchronbit durch Korrelation mit der differentiellen Phase detektiert und die Abschätzung der Parameter der Ausgangsphase $\Theta$ und der Restfrequenzabweichung $\Delta f_o$ angefangen werden kann, dadurch gekennzeichnet, daß die progressive Verfeinerung der angenäherten Werte mittels zweier digitaler Schleifen erhalten wird, und zwar : eine zweite Schleife (32), die angesteuert wird jenseits eines Schwellenwerts (S) zum Deteketieren des Synchronbits, und eine erste, die Bits in aufeinanderfolgenden Blöcken behandelnde Schleife (31), die schneller ist als die zweite Schleife, wobei jeder Durchgang diesseits des genannten Schwellenwertes (S) ausgelöst wird und eine Zwischenentscheidung eines zu den vorhergehenden Bits des Informationspakets hinzuzufügenden Bit-Blocks für die Abschätzung von $\Theta_0$ und $\Delta f_0$ herbeiführt, solange der Vorrat an Bits des Pakets reicht.

2. Verfahren nach Anspruch 1, dadurch gekennzeichnet, daß das über N Bits bekannte Bezugssignal, wodurch es möglich ist, daß der Synchronrahmen in weniger als einer halben Bit-Zeit (T/2) detektiert wird, die nachfolgenden Verfahrenssehritte umfaßt:
a) eine Abschätzung des Synchron-Rahmens (23) durch eine erste Korrelation mit der differentiellen Phase, die ebenfalls eine erste Abschätzung des Synchron-Bits (24) (SYN) in etwa T/4 liefert,
b) eine zweite Abschätzung des Synchron-Bits (24) in etwa T/4 durch eine zweite Korrelation mit der differentiellen Phase an dem in Quadratur empfangenen Signal,
c) die Gliederung der genannten Abschätzungen des Synchronbits (24) in Abhängigkeit der Bedeutung der Korrelationsspitzen : die erste (SYNP) für die höchste Spitze und die zweite (SYNS) für die andere,
d) eine angepaßte Filterung (25) ausgelöst mit dem festgehaltenen Wert (SYNP) für eine zusätzliche Anzahl Bits nach der genannten vorhergehenden Folge,
e) die Abschätzung der Ausgangsphase $\Theta_0$ und der Restfrequenzabweichung $\Delta f_o$ (28), ausgehend von einem gefilterten (25) und demodulierten Signal (26),
f) die progressive Verfeinerung von $\Theta_0$ und $\Delta f_0$ (31) in einer ersten Schleife, die sich gerade nach der genannten angepaßten Filterung wieder schließt und die bei jedem Durchgang eine Anzahl gegenüber denen des vorhergehenden Durchgangs zusätzlicher Bits berücksichtigt, so daß $\Theta_0$ und $\Delta f_0$ einer Fehlerschwelle S entsprechen,
g) die Änderung der Korrelationsspitzen (SYNP und SYNS) (32) nach einer zweiten Schleife, die sich vor der genannten angepaßten Filterung wieder schließt, wenn die Schwelle (S) überschritten ist (29), und am Anfang der zweiten Schleife mit dem neuen Wert einer sekundären Korrelationsspitze (SYNS) wieder anfangt, wobei die genannte angepaßte Filterung durch ein Filter mit einer endlichen Impulsstoßantwort vom Gaußschen Typ zum Beschränken des Störungsbandes.

3. Verfahren nach Anspruch 2, dadurch gekennzeichnet, daß die genannten Abschätzungen der Ausgangsphase $\Theta_0$ und der Restfrequenzabweichung $\Delta f_o$ nach der Filterung (25) die nachfolgend: Verfahrensschritte umfassen:

EP 0 349 064 B1

- Eliminierung des Modulationsterms (26), indem das Produkt aus dem empfangenen Signal und dem zugeordneten Bezugssignal erzeugt wird,
- Phasenabwicklung (27), indem die Phasensprünge von $2\pi$ eliminiert werden zum Erhalten einer linearen Änderung mit der nachfolgenden Gleichung:

$$y = \Delta\omega_0 x + \Theta_0 \text{ mit } \Delta\omega_0 = 2\pi\Delta f_0,$$

- Berechnung der abgeschätzten Parameter

$$\Delta\hat{\omega}_0$$

und $\hat{\Theta}$ (28) durch ein lineares Regressionsverfahren und der Abweichung

$$\epsilon = \sum_{i=0}^{N} |y_i - (\Delta\hat{\omega}_0 . x_i + \hat{\Theta})|^2$$

zwischen den Punkten, die der genannten abgewickelten Phase und der genannten geraden Regressionslinie entsprechen.

4. Verfahren nach Anspruch 3, dadurch gekennzeichnet, daß die genannte Abweichung $\epsilon$ geringer ist als der genannte Schwellenwert (S), wobei die genannte Abschätzung von $\Delta f_0$ und $\Theta_0$ nach einer ersten Schleife in mehreren Durchgängen verfeinert (31) wird wobei die Zwischenentscheidungen an den N Bits der vorhergehenden Folge benutzt werden, der bei jedem Durchgang eine bestimmte Anzahl bestimmter Bits hinzugefügt wird.

5. Verfahren nach Anspruch 3, dadurch gekennzeichnet, daß wenn wegen einer fehlerhaften Synchronbitbewertung die genannte Abweichung $\epsilon$ den genannten Schwellenwert (29) überschreitet, der Rechenvorgang nach einer zweiten Schleife (32) abermals durchgeführt wird um die angepaßte Filterung und die Abschätzung von $\Delta f_0$ und $\Theta_0$ ausgehend von dem anderen Wert des Synchronbits entsprechend dem genannten zweiten Wert SYNS nochmals zu machen.

6. Verfahren nach Anspruch 4 oder 5, dadurch gekennzeichnet, daß nach dem letzten Durchgang (30) eine Kompensation nur den Phasenanteil des Signals bestehen läßt, das weiterhin weder von der Restfrquenzabweichung $\Delta f_0$ noch von der Ausgangsphase $\Theta_0$ beeinflußt wird, wobei die Endentscheidung danach durchgeführt wird (33) und eine differentielle Decodierung zum Schluß die Folge übertragener binärer Informationen liefert.

7. Anwendung des Verfahrens nach einem der Ansprüche 1 bis 6 bei kohärenter Demodulation modulierter Signale, die nach den Typen GMSK, 2SRC, TFM, GTFM,.... moduliert sind, deren Phasenabwicklungsgesetz einer progressiven Variation folgt.

14

FIG.1

FIG.2

FIG.3

FIG.4

FIG.5

$$\Delta\hat{\omega}_0 \, , \, \hat{\theta}_0$$
$$\varepsilon = \ll (yi - \Delta\hat{\omega}_0 x_i - \Delta\hat{\theta}_0)^2$$

SYNP   SYNS
SYN = SYNP

SYN = SYNS

$\varepsilon < s$ ?

FIG.6

FIG.7

FIG.8

EP 0 349 064 B1

FIG.9

22